# EUROPÄISCHE PATENTSCHRIFT

(11) **EP 3 948 127 B1**
(45) Veröffentlichungstag und Bekanntmachung des Hinweises auf die Patenterteilung: **01.11.2023**
(21) Anmeldenummer: 19817950.9
(22) Anmeldetag: 20.11.2019
(51) Int. Cl.: F26B 3/24, F26B 11/16, F26B 23/00, F26B 23/10, F26B 17/20

(54) **VORRICHTUNG ZUM TROCKNEN FEUCHTER, RIESELFÄHIGER PRODUKTE**
DEVICE FOR DRYING MOIST, FLOWABLE PRODUCTS
DISPOSITIF POUR LE SÉCHAGE DE PRODUITS HUMIDES ET FLUIDES

(43) Veröffentlichungstag der Anmeldung: 09.02.2022
(73) Patentinhaber: Vettertec GmbH, 34123 Kassel (DE)
(72) Erfinder: STANZEL, Ralf, 37247 Großalmerode (DE)
(74) Vertreter: Sprenger, Gerrit Lars Eike
(86) Internationale Anmeldenummer: PCT/DE2019/100995
(87) Internationale Veröffentlichungsnummer: WO 2021/098894

(56) Entgegenhaltungen:
- WO-A1-2007/145187
- WO-A1-2011/081251
- DE-A1-102017 110 534
- GB-A- 2 087 528
- JP-A- 2010 117 085
- JP-A- 2013 117 359
- US-A1- 2018 209 738

## Beschreibung

Die Erfindung betrifft eine Vorrichtung zum Trocknen feuchter, rieselfähiger Produkte.

Derartige Vorrichtungen finden in vielen technischen Bereichen Anwendung, bei denen Dampf als Wärmeträger genutzt wird und niedrigste Temperaturen erforderlich sind. Beispielsweise sind hier nur die Trocknung von Getreidekeimen, Getreidefasern, Gluten und Futtermittel sowie Biertreber und Biertreber-Hefegemische genannt. Darüber hinaus können aber noch eine Vielzahl anderer rieselfähiger Produkte mit derartigen Vorrichtungen getrocknet werden.

Eine Vorrichtung zum Trocknen von feuchten, rieselfähigen Produkten nach dem Oberbegriff des Patentanspruchs 1 ist beispielsweise in der US 2018/209738 A1 und in Teilen in der DE 10 2017 110 534 A1 beschrieben. Das grundsätzliche Problem bei derartigen Vorrichtungen zum Trocknen feuchter, rieselfähiger Produkte besteht darin, dass aus dem feuchten Produkt während des Trocknens Feuchtigkeit in Form von Dampf, dem sogenannten Brüden, austritt. Dieser Dampf wurde in der Vergangenheit einfach als Abdampf in die Umwelt abgegeben. Hierdurch entstand ein großer Energie- und Wasserverlust im gesamten Trocknungsprozess. Die DE 10 2017 110 534 A1 schlägt bereits eine Vorrichtung vor, mit welcher zumindest die Wärmeenergie des Brüdens zum Teil weitergenutzt werden kann. Dort ist vorgesehen, dass innerhalb des Trocknerbehälters ein Wärmetauscher angeordnet ist, mit welchem dem Brüden Wärmeenergie entzogen werden kann, die nachfolgend dem weiteren Trocknungsprozess wieder zugeführt werden kann. Der Brüden kondensiert dabei an dem Wärmetauscher, wobei das entstandene Kondensat in einem separaten Behältnis aufgefangen wird. Allerdings wird dieses Kondensat erst einmal dem Trocknungsprozess entzogen und muss für eine weitere Verwendung wieder in diesen Trocknungsprozess integriert werden.

Aufgabe der Erfindung ist es daher, eine Vorrichtung zum Trocknen feuchter, rieselfähiger Produkte derart weiterzubilden, dass sowohl die Wärmeenergie des Brüdens als auch die entstehende Feuchtigkeit in Form von Wasser im Trocknungsprozess weiterverwendet werden kann, wobei eine besonders gute Energieeffizienz und ressourcenschonende Arbeitsweise der Vorrichtung zum Trocknen feuchter, rieselfähiger Produkte erreicht werden soll.

Gelöst wird diese Aufgabe durch eine Vorrichtung zum Trocknen feuchter, rieselfähiger Produkte mit allen Merkmalen des Patentanspruchs 1. Vorteilhafte Ausgestaltungen der Erfindung finden sich in den Unteransprüchen.

Die erfindungsgemäße Vorrichtung zum Trocknen feuchter, rieselfähiger Produkte weist dabei ein Behältnis auf, welches mit einer Einlassöffnung zur Zuführung feuchter, rieselfähiger Produkte und einer Auslassöffnung zur Entnahme getrockneter, rieselfähiger Produkte versehen ist. Innerhalb des Behältnisses ist dabei eine heizdampfdurchströmte erste Wärmeübertragungseinrichtung ebenso angeordnet, wie eine Fördereinrichtung zur Förderung rieselfähiger Produkte von der Einlassöffnung zur Auslassöffnung. Die erste Wärmeübertragungseinrichtung weist dabei eine Heizdampfzuleitung und eine Heizdampfableitung auf. Das Behältnis weist zudem eine Abdampfleitung für den Abdampf beziehungsweise den Brüden auf. Die Erfindung zeichnet sich nunmehr dadurch aus, dass die Vorrichtung zum Trocknen feuchter, rieselfähiger Produkte einen mit der Heizdampfableitung verbundenen Entspannungsbehälter aufweist, der zum einen mit einer ersten Verdichtereinrichtung, welche mit der Heizdampfzuleitung verbunden ist, und zum anderen mit einer Verdampfereinrichtung verbunden ist, wobei die Verdampfereinrichtung ebenfalls mit der ersten Verdichtereinrichtung verbunden ist und wobei die Abdampfleitung des Behältnisses unter Zwischenschaltung einer zweiten Verdichtereinrichtung ebenfalls mit der Verdampfereinrichtung verbunden ist.

Durch die erfindungsgemäße Vorrichtung ist es nunmehr ermöglicht, den Energiegehalt des Brüdens innerhalb des Trocknungsprozesses weiter zu verwenden. Durch die erfindungsgemäße Vorrichtung ist somit ein geschlossenes System gegeben, bei dem ca. 90 % der konventionell erzeugten Heizdampfmenge eingespart werden kann. Der Brüden wird dabei über die Abdampfleitung aus dem Behältnis durch die zweite Verdichtereinrichtung abgesaugt und der Verdampfereinrichtung zur Beheizung zugeführt. Hierdurch ist gewährleistet, dass die Wärmenergie des Brüdens dem Trocknungsprozess erhalten bleibt und somit deutlich weniger Energie zur Erzeugung des Heizdampfes als auch deutlich weniger Ressourcen in Form von Frischwasser zur Erzeugung des Heizdampfes notwendig sind.

Dabei ist in die Abdampfleitung zwischen dem Behältnis und der zweiten Verdichtereinrichtung eine Filtereinrichtung angeordnet, die den Abdampf beziehungsweise den Brüden von groben Schmutzpartikeln reinigt. Durch die Integration einer Filtereinrichtung ist es gewährleistet, dass grobe Partikel aus dem Dampfsystem des Trocknungsprozesses herausgehalten werden und somit keine Beschädigungen innerhalb des gesamten Dampfsystems durch derartige Partikel auftreten können.

Weiterhin ist es vorgesehen, dass die erste Wärmeübertragungseinrichtung als Rohrbündel mit einer Vielzahl von heizdampfdurchströmten Rohren ausgebildet ist, wobei die erste Wärmeübertragungseinrichtung vorzugsweise drehbar in dem Behältnis angeordnet ist. Die Ausbildung der ersten Wärmeübertragungseinrichtung als Rohrbündel mit einer Vielzahl von heizdampfdurchströmten Rohren hat den Vorteil, dass durch die Vielzahl von Rohren eine möglichst große Oberfläche der ersten Wärmeübertragungseinrichtung gegeben ist, sodass die feuchten, rieselfähigen Produkte, die in dem Behältnis getrocknet werden sollen, eine möglichst große Kontaktoberfläche zu der ersten Wärmeübertragungseinrichtung zur Verfügung gestellt bekommen. Hierdurch wird die Leistung des Gesamtsystems zum Trocknen der feuchten, rieselfähigen Produkte erhöht, da durch den Kontakt der rieselfähigen Produkte mit der ersten Wärmeübertragungseinrichtung eine besonders gute Wärmeübertragung und somit eine besonders gute Trocknung der rieselfähigen Produkte erfolgt. Die drehbare Ausgestaltung der ersten Wärmeübertragungseinrichtung, insbesondere des Rohrbündels, erhöht die Trocknungsleistung nochmals, da dadurch die Wahrscheinlichkeit des Kontaktes rieselfähiger Produkte mit der Wärmeübertragungseinrichtung nochmals erhöht und somit auch die Trocknungsleistung des Gesamtsystems nochmals erhöht wird.

Vorteilhafterweise besteht die erste Verdichtereinrichtung aus wenigstens einem Radialverdichter und vorzugsweise aus einem Radialverdichter mit nachgeschaltetem Kolbenverdichter. Diese erste Verdichtereinrichtung ist dazu ausgebildet, die Dampfströme aus dem Entspannungsbehälter und der Verdampfereinrichtung abzusaugen und zu verdichten. Dazu weist die erste Verdichtereinrichtung einen Radialverdichter, der vorzugsweise dreistufig aufgebaut ist, auf, der den Dampf in drei Stufen von ca. 1000 mbar auf ca. 2000 mbar komprimiert. Die dreistufige Komprimierung erfolgt dabei wieder über separate Radialkompressoren, wobei der erste von ca. 1000 mbar auf ca. 1250 mbar, der zweite auf 1500 mbar und der dritte abschließend auf 2000 mbar verdichtet. Innerhalb der Radialkompressoren wird dabei wiederum Sattdampf durch Wassereinspritzung nach jeder der drei Kompressionsstufen erzeugt.

Dieser Sattdampf kann nunmehr in einem nachgeschalteten Kolbenkompressor der ersten Verdichtereinrichtung gefördert werden. In diesem Kolbenkompressor wird der Dampf auf den gleichen Druck wie den des Heizdampfes verdichtet und mittels einer Wassereinspritzung Sattdampf erzeugt. Dieser wird durch eine Rohrleitung in die Dampfzuführleitung des Heizdampfes gefördert. Hinter dieser Zusammenführung ist ein Dampfregelventil in der Dampfzuführleitung integriert, das den Vordruck auf den in der ersten Wärmeübertragungseinrichtung benötigten Heizdampfdruck regelt.

Nach einer ersten vorteilhaften Ausgestaltung der Erfindung ist die zweite Verdichtereinrichtung als Radialverdichter ausgebildet. Derartige Radialverdichter haben sich in der Technik bereits bestens bewährt, wobei eine genaue Steuerung des Dampfdruckes möglich ist. Der über die Abdampfleitung des Behältnisses angesaugte Brüden wird dabei von einem in dem Behältnis herrschenden Normaldruck auf rund 2000 mbar erhöht. Vorzugsweise ist der Radialverdichter dabei dreistufig ausgebildet, sodass in einer ersten Stufe ein Radialkompressor des Radialverdichters den aus dem Behältnis abgesaugten Brüden von ca. 1000 mbar auf ca. 1250 mbar komprimiert. Mit einem weiteren nachgeschalteten Radialkompressor wird der Abdampfdruck nun auf rund 1500 mbar erhöht und abschließend in einem dritten nachgeschalteten Radialkompressor auf 2000 mbar eingestellt. Damit nach der Abdampfverdichtung Sattdampf vorliegt, wird in jedem der drei Radialkompressoren Wasser durch eine Einspritzdüse eingespritzt, sodass sich die resultierende Abdampfmenge um diese Menge erhöht. Der verdichtete, heiße Abdampf wird über eine Rohrleitung in die Verdampfereinrichtung, vorzugsweise in einen vertikal installierten Fallstromverdampfer gefördert.

Um dabei die Förderung der rieselfähigen Produkte von der Einlassöffnung zur Auslassöffnung zu optimieren, ist diese durch Schaufeln gebildet, die vorzugsweise an Schaufelträgern der ersten Wärmeübertragungseinrichtung angeordnet sind. In besonders guter Weise lässt sich dabei eine Förderung der rieselfähigen Produkte innerhalb des Behältnisses erreichen, wenn die erste Wärmeübertragungseinrichtung als Rohrbündel mit Schaufelträgern, an denen die Schaufeln angeordnet sind, ausgebildet ist. Durch die Drehung des Rohrbündels erfolgt dabei eine besonders effektive und gezielte Förderung der rieselfähigen Produkte von der Einlassöffnung zur Auslassöffnung des Behältnisses bei gleichzeitig optimierter Kontaktierung der rieselfähigen Produkte mit den Rohren des Rohrbündels. Zudem können die Schaufeln der Fördereinrichtung ebenfalls zur Trocknung der rieselfähigen Produkte beitragen, wenn die Schaufeln und die Schaufelträger aus einem Material mit entsprechender Wärmeleitfähigkeit ausgebildet sind.

Der Heizdampf liegt am Eintritt in die Wärmeübertragungseinrichtung als Sattdampf vor und gibt seine Wärmeenergie über die Wärmeübertragungseinrichtung an das feuchte Produkt ab. Hierbei kondensiert der Heizdampf, sodass am Austritt am Ende der Wärmeübertragungseinrichtung Kondensat vorliegt. Dieses Kondensat wird in einer Rohrleitung in einen Kondensatableiter gefördert. Aufgrund eines Druckgefälles vor und hinter dem Kondensatableiter entsteht hinter diesem Entspannungsdampf und Kondensat auf niedrigerem Druckniveau als in dem Behältnis zum Trocknen. Der Entspannungsbehälter ist daher zur Entspannung des aus dem Heizdampf entstehenden Kondensats und nachfolgend zur Trennung eines Restkondensats und eines entstehenden Entspannungsdampfs ausgebildet. Der Entspannungsdampf wird mittels der ersten Verdichtereinrichtung durch eine Rohrleitung aus dem Entspannungsbehälter abgesaugt und nach Verdichtung und Erhitzung der Heizdampfzuleitung zugeführt. Das Restkondensat in dem Entspannungsbehälter wird durch eine Pumpe in die Verdampfereinrichtung gefördert.

Die Verdampfereinrichtung ist vorteilhafterweise als Fallstromverdampfer ausgebildet. Dabei ist innerhalb dieser Verdampfereinrichtung eine zweite Wärmeübertragungseinrichtung angeordnet, welche vorzugsweise als Rohrbündel mit einer Vielzahl von Rohren und in Art eines Wärmetauschers ausgebildet ist. Hierbei wird der durch die zweite Verdichtereinrichtung in der Abdampfleitung des Behälters geförderte Abdampf beziehungsweise Brüden in die Verdampfereinrichtung eingeleitet. Das Kondensat wird durch eine Pumpe vom Entspannungsbehälter in den unteren Bereich der Verdampfereinrichtung eingeleitet und sammelt sich dort. Am unteren Ende der Verdampfereinrichtung ist eine Rohrleitung und eine Pumpe angeschlossen, die das Kondensat in einer Rohrleitung an das obere Ende der Verdampfereinrichtung fördert. Das Kondensat gelangt dort auf einen Flüssigkeitsverteiler, der es in das Rohrbündel gleichmäßig verteilt. Das Kondensat fließt vertikal an den Rohrwänden in einem dünnen Film nach unten und wird auf der anderen Rohrwandseite vom Abdampf beziehungsweise Brüden beheizt. Während das Kondensat auf dem Weg nach unten verdampft, kondensiert der Abdampf und fließt ebenfalls nach unten wo das Abdampfkondensat auf einem Boden gesammelt wird. Ist ein ausreichender Flüssigkeitsspiegel erreicht, fließt es durch eine Rohrleitung in einen kleinen Vorlagebehälter, von wo es durch eine Pumpe entweder in die Eintrittsrohrleitung des Abdampfes eingespritzt wird, um diesen zu sättigen, oder zur weiteren Verwendung weggefördert wird. Das verdampfte Kondensat aus der ersten Wärmeübertragungseinrichtung wird ebenfalls durch die erste Verdichtereinrichtung aus dem unteren Bereich der Verdampfereinrichtung abgezogen, während sich das nicht verdampfte Kondensat aus der ersten Wärmeübertragungseinrichtung am unteren Ende der Verdampfereinrichtung sammelt und ein Teil erneut durch die Pumpe nach oben gefördert und der andere Teil aus dem Prozess ausgeschleust wird.

Weiterhin werden in einer vorteilhaften Ausgestaltung der Erfindung die beiden Verdichtereinrichtungen, insbesondere die Radialverdichter und -kompressoren als auch der Kolbenkompressor elektrisch betrieben.

Weitere Ziele, Vorteile, Merkmale und Anwendungsmöglichkeiten der vorliegenden Erfindung ergeben sich aus der nachfolgenden Beschreibung von einem Ausführungsbeispiel anhand der Zeichnung.

Es zeigt:

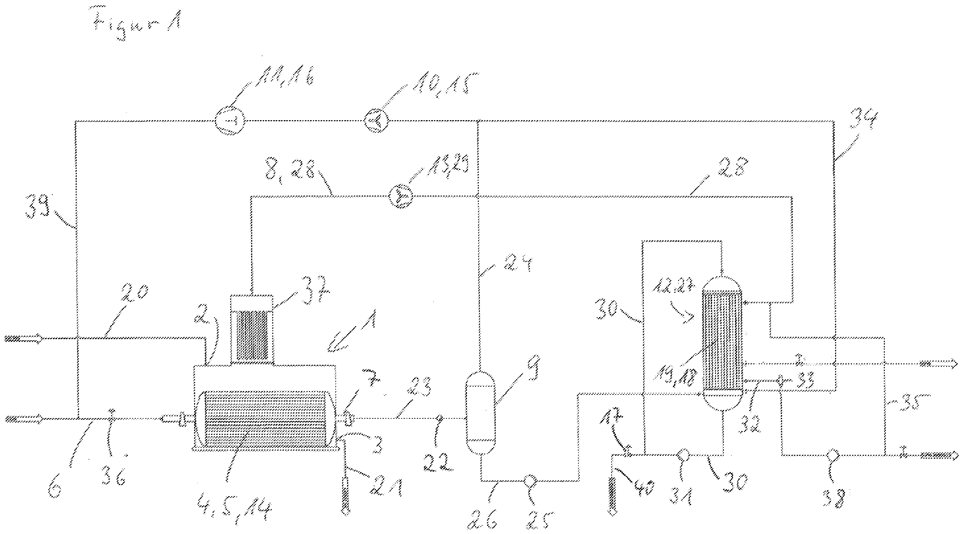

- Figur 1:: ein Ausführungsbeispiel einer erfindungsgemäßen Vorrichtung zum Trocknen feuchter, rieselfähiger Produkte in einer schematischen Darstellung.

Das in Figur 1 dargestellte Ausführungsbeispiel einer Vorrichtung zum Trocknen feuchter, rieselfähiger Produkte weist ein Behältnis 1 auf, in dem eine als Rohrbündel 14 ausgebildete erste Wärmeübertragungseinrichtung 4 angeordnet ist. Das Rohrbündel 4 weist dabei eine Vielzahl von Rohren auf, in welche über eine Heizdampfzuleitung 6 Heizdampf zum Heizen des Rohrbündels in dieses einführbar ist. Das Rohrbündel 14 ist dabei drehbar in dem Behältnis 1 angeordnet. Über eine Einlassöffnung 2 werden über eine Zuleitung 20 feuchte, rieselfähige Produkte in das Behältnis 1 gefördert. Die feuchten, rieselfähigen Produkte werden dabei über eine Fördereinrichtung 5, welche im vorliegenden Ausführungsbeispiel durch nicht dargestellte Schaufeln, welche an ebenfalls nicht dargestellten Schaufelträgern befestigt sind, die an dem Rohrbündel 14 angeordnet sind, von der Einlassöffnung 2 zu einer Auslassöffnung 3 gefördert. Während dieser Förderung rieseln die feuchten, rieselfähigen Produkte immer wieder über die Rohre des Rohrbündels 14, wobei Wasser und andere flüchtige Stoffe aus dem rieselfähigen Produkt verdampfen. An der Auslassöffnung 3 werden die getrockneten, rieselfähigen Produkte mittels einer Abführleitung 21 aus dem Behältnis 1 entnommen.

Der Heizdampf liegt am Eintritt in das Rohrbündel 14 als Sattdampf vor und gibt seine Wärmeenergie über die Rohre des Rohrbündels 14 an das feuchte, rieselfähige Produkt ab. Hierbei kondensiert der Heizdampf innerhalb der Rohre des Rohrbündels 14, sodass am Austritt am anderen Ende der Rohre des Rohrbündels 14 Kondensat vorliegt. Dieses wird in einer Rohrleitung in einen Kondensatableiter 22 gefördert. Aufgrund eines Druckgefälles vor und hinter dem Kondensatableiter 22 entsteht hinter diesem Entspannungsdampf und Kondensat auf niedrigerem Druckniveau. Dieses Gemisch wird über eine Rohrleitung 23 in einen Entspannungsbehälter 9 geleitet. Innerhalb des Entspannungsbehälters 9 steigt der Entspannungsdampf nach oben und wird mittels einer ersten Verdichtereinrichtung 10, 11 über eine Rohrleitung 24 abgesaugt. Das Kondensat innerhalb des Entspannungsbehälters 9 wird durch eine in eine Rohrleitung 26 integrierte Pumpe 25 in eine als Fallstromverdampfer 27 ausgebildeten Verdampfereinrichtung 12 gefördert.

Innerhalb des Fallstromverdampfers 27 ist ein Rohrbündel 19 angeordnet. In diesen Fallstromverdampfer 27 wird der Abdampf beziehungsweise Brüden aus dem Behältnis 1 über eine Rohrleitung 28 mittels einer als Radialverdichter 29 ausgebildeten zweiten Verdichtereinrichtung 13 gefördert. Der Abdampf beziehungsweise Brüden wird dabei noch durch eine zwischen dem Radialverdichter 29 und dem Behältnis 1 angeordneten Filtereinrichtung 37 von groben Schmutzpartikeln gereinigt.

Mittels des Radialverdichters 29, welcher dreistufig aufgebaut ist, wobei ein Radialkompressor in einer ersten Stufe den Druck des Abdampfs von ca. 1000 mbar auf ca. 1250 mbar, ein zweiter Radialkompressor in einer zweiten Stufe auf ca. 1500 mbar und in einer abschließenden dritten Stufe ein dritter Radialkompressor auf ca. 2000 mbar erhöht. Damit nach der Abdampfverdichtung Sattdampf vorliegt, wird in jedem der drei Radialkompressoren Wasser durch eine Einspritzdüse eingespritzt, sodass sich die resultierende Abdampfmenge um diese Menge erhöht. Der heiße Abdampf wird nunmehr über die Rohrleitung 28 in den Fallstromverdampfer 27 gefördert.

Der verdichtete, heiße Abdampf wird im oberen Bereich des vertikal aufgestellten Fallstromverdampfers 27 eingeleitet, während Kondensat in dem unteren Bereich in den Fallstromverdampfer 27 gefördert wird und sich dort sammelt. Am unteren Ende des Fallstromverdampfers 27 ist über eine Rohrleitung 30 eine Pumpe 31 angeschlossen, die das Kondensat über die Rohrleitung 30 an das obere Ende des Fallstromverdampfers 27 fördert. Das Kondensat gelangt dort auf einen Flüssigkeitsverteiler, der es in das Rohrbündel 19 gleichmäßig verteilt. Das Kondensat fließt vertikal an den Rohrwänden des Rohrbündels 19 in einem dünnen Film nach unten und wird auf der anderen Rohrwandseite vom Abdampf beheizt. Während das Kondensat auf dem Weg nach unten verdampft, kondensiert der Abdampf und fließt ebenfalls nach unten, wo das Abdampfkondensat auf einem Boden gesammelt wird. Ist ein entsprechender Flüssigkeitsspiegel erreicht, fließt das Kondensat durch eine Rohrleitung 32 in einen kleinen Vorlagebehälter 33, von wo es durch eine Pumpe 38 entweder über eine Rohrleitung 35 in die Eintrittsrohrleitung 28 des Abdampfes eingespritzt wird, um diesen zu sättigen, oder zur weiteren Verwendung weg gefördert wird.

Das verdampfte Kondensat aus der ersten Wärmeübertragungseinrichtung wird ebenfalls durch die erste Verdichtereinrichtung 10, 11 in Form eines Radialverdichters 15 aus dem unteren Bereich des Fallstromverdampfers 27 über eine Rohrleitung 34 abgezogen, während sich das nicht verdampfte Kondensat aus der ersten Wärmeübertragungseinrichtung am unteren Ende des Fallstromverdampfers sammelt und ein Teil erneut durch die Pumpe 31 und die Rohrleitung 30 zum oberen Ende des Fallstromverdampfers 27 gefördert wird. Ein übriger Teil wird über eine Rohrleitung 40 und ein Regelventil 17 aus dem Prozess herausgeschleust.

Die Dampfströme aus dem Entspannungsbehälter 9 und dem Fallstromverdampfer 27 werden über die Rohrleitungen 24 und 34 durch den Radialverdichter 15 abgezogen. Der Radialverdichter 15 ist dabei ebenfalls dreistufig ausgebildet und verdichtet den Dampf mittels dreier Radialkompressoren sukzessive von ca. 1000 mbar auf ca. 1250 mbar und weiter auf ca. 1500 mbar und abschließend auf ca. 2000 mbar. Während der Verdichtung wird Sattdampf durch Wassereinspritzungen nach jeder der drei Kompressionsstufen erzeugt. Der so vorliegende Sattdampf wird nunmehr in einem Kolbenkompressor 16 der ersten Verdichtereinrichtung 11 gefördert. In diesem Kolbenkompressor 16 wird der Dampf auf den gleichen Druck wie der des Heizdampfnetzes verdichtet und mittels einer Wassereinspritzung Sattdampf erzeugt. Dieser Sattdampf wird durch eine Rohrleitung 39 in die Heizdampfzuleitung 6 des Heizdampfes gefördert. Hinter dieser Zusammenführung ist ein Dampfregelventil 36 angeordnet, das den Vordruck auf den im Behältnis 1 benötigten Heizdampfdruck regelt, wobei der Kreislauf von neuem beginnen kann.

Abschließend sei noch angemerkt, dass im vorliegenden Ausführungsbeispiel die beiden Verdichtereinrichtungen 10, 11 und 13, insbesondere die Radialverdichter 15, 29 und -kompressoren als auch der Kolbenkompressor 16 elektrisch betrieben werden.

### Bezugszeichenliste

- 1: Gehäuse
- 2: Einlassöffnung
- 3: Auslassöffnung
- 4: erste Wärmeübertragungseinrichtung
- 5: Fördereinrichtung
- 6: Heizdampfzuleitung
- 7: Heizdampfableitung
- 8: Abdampfleitung
- 9: Entspannungsbehälter
- 10: erste Verdichtereinrichtung
- 11: erste Verdichtereinrichtung
- 12: Verdampfereinrichtung
- 13: zweite Verdichtereinrichtung
- 14: Rohrbündel
- 15: Radialverdichter
- 16: Kolbenverdichter
- 17: Regelventil
- 18: zweite Wärmeübertragungseinrichtung
- 19: Rohrbündel
- 20: Zuleitung
- 21: Ableitung
- 22: Kondensatableiter
- 23: Rohrleitung
- 24: Rohrleitung
- 25: Pumpe
- 26: Rohrleitung
- 27: Fallstromverdampfer
- 28: Rohrleitung
- 29: Radialverdichter
- 30: Rohrleitung
- 31: Pumpe
- 32: Rohrleitung
- 33: Vorlagebehälter
- 34: Rohrleitung
- 35: Rohrleitung
- 36: Dampfregelventil
- 37: Filtereinrichtung
- 38: Pumpe
- 39: Rohrleitung
- 40: Rohrleitung

## Patentansprüche

1. Vorrichtung zum Trocknen feuchter, rieselfähiger Produkte mit
- einem Behältnis (1), welches mit einer Einlassöffnung (2) zur Zuführung feuchter, rieselfähiger Produkte und einer Auslassöffnung (3) zur Entnahme getrockneter, rieselfähiger Produkte versehen ist,
- einer heizdampfdurchströmten ersten Wärmeübertragungseinrichtung (4) innerhalb des Behältnisses (1),
- einer Fördereinrichtung (5) zur Förderung rieselfähiger Produkte von der Einlassöffnung (2) zur Auslassöffnung (3),
- einer Heizdampfzuleitung (6) und einer Heizdampfableitung (7) für die erste Wärmeübertragungseinrichtung (4)
- einer Abdampfleitung (8) für das Behältnis (1),
wobei
die Vorrichtung einen mit der Heizdampfableitung (7) verbundenen Entspannungsbehälter (9) aufweist, der zum einen mit einer ersten Verdichtereinrichtung (10, 11), welche mit der Heizdampfzuleitung (6) verbunden ist, und zum anderen mit einer Verdampfereinrichtung (12) verbunden ist, wobei die Verdampfereinrichtung (12) ebenfalls mit der ersten Verdichtereinrichtung (10, 11) verbunden ist und wobei die Abdampfleitung (8) des Behältnisses (1) unter Zwischenschaltung einer zweiten Verdichtereinrichtung (13) ebenfalls mit der Verdampfereinrichtung (12) verbunden ist, **dadurch gekennzeichnet, dass** zwischen dem Behältnis (1) und der zweiten Verdichtereinrichtung eine Filtereinrichtung (37) angeordnet ist und
die erste Wärmeübertragungseinrichtung (4) als Rohrbündel (14) mit einer Vielzahl von heizdampfdurchströmten Rohren ausgebildet ist, wobei die erste Wärmeübertragungseinrichtung (4) vorzugsweise drehbar in dem Behältnis (1) angeordnet ist und
die erste Verdichtereinrichtung (10, 11) aus wenigstens einem Radialverdichter (10) und vorzugsweise aus einem Radialverdichter (10) mit nachgeschaltetem Kolbenverdichter (11) besteht und
die erste Verdichtereinrichtung (10, 11) dazu ausgebildet ist, Dampf aus dem Entspannungsbehälter (9) und Dampf aus der Verdampfereinrichtung (12) zu komprimieren und dabei zu erhitzen, sodass der entstehende Dampf und der konventionell erzeugte Heizdampf über ein Regelventil (36) miteinander mischbar sind,
wobei über das Regelventil (36) der für die Trocknung notwendige Heizdampfdruck einstellbar ist.

2. Vorrichtung nach Anspruch 1, **dadurch gekennzeichnet, dass** die zweite Verdichtereinrichtung (13) als Radialverdichter ausgebildet ist.

3. Vorrichtung nach einem der vorhergehenden Ansprüche, **dadurch gekennzeichnet, dass** die Fördereinrichtung (5) durch Schaufeln gebildet ist, die vorzugsweise an Schaufelträgern der ersten Wärmeübertragungseinrichtung (4) angeordnet sind.

4. Vorrichtung nach einem der vorhergehenden Ansprüche, **dadurch gekennzeichnet, dass** der Entspannungsbehälter (9) zur Entspannung des aus dem Heizdampf entstehenden Kondensats und nachfolgend zur Trennung eines Restkondensats und eines entstehenden Entspannungsdampfes ausgebildet ist.

5. Vorrichtung nach einem der vorhergehenden Ansprüche, **dadurch gekennzeichnet, dass** die Verdampfereinrichtung (12) als Fallstromverdampfer (14) ausgebildet ist.

6. Vorrichtung nach einem der vorhergehenden Ansprüche, **dadurch gekennzeichnet, dass** innerhalb der Verdampfereinrichtung (12) eine zweite Wärmeübertragungseinrichtung (18) angeordnet ist, welche vorzugsweise als Rohrbündel (19) mit einer Vielzahl von Rohren und in Art eines Wärmetauschers ausgebildet ist.

## Claims

1. Apparatus for drying moist products that are capable of trickling, having
- a container (1) which is provided with an inlet opening (2) for feeding of moist products capable of trickling and with an outlet opening (3) for removal of dried products capable of trickling,
- a first heat-transfer device (4) within the container (1), which first heat-transfer device is flowed through by heating steam,
- a conveying device (5) for conveying from the inlet opening (2) to the outlet opening (3) products capable of trickling,
- a heating-steam feed line (6) and a heating-steam discharge line (7) for the first heat-transfer device (4),
- an exhaust-steam line (8) for the container (1),
wherein
the apparatus has an expansion vessel (9) which is connected to the heating-steam discharge line (7) and which is connected on the one hand to a first compressor device (10, 11), which is connected to the heating-steam feed line (6), and on the other hand to an evaporator device (12), wherein the evaporator device (12) is likewise connected to the first compressor device (10, 11), and wherein, with interposition of a second compressor device (13), the exhaust-steam line (8) of the container (1) is likewise connected to the evaporator device (12),
**characterized in that** a filter device (37) is arranged between the container (1) and the second compressor device, and the first heat-transfer device (4) is designed as a tube bundle (14) with a multiplicity of tubes that are flowed through by heating steam, wherein the first heat-transfer device (4) is preferably arranged rotatably in the container (1), and
the first compressor device (10, 11) consists of at least one radial compressor (10) and preferably of a radial compressor (10) with downstream piston compressor (11), and
the first compressor device (10, 11) is configured to compress, and in the process to heat, steam from the expansion vessel (9) and steam from the evaporator device (12), so that the steam which is formed and the conventionally generated heating steam are able to be mixed with one another via a regulating valve (36),
wherein the heating-steam pressure required for the drying is settable via the regulating valve (36).

2. Apparatus according to Claim 1, **characterized in that** the second compressor device (13) is designed as a radial compressor.

3. Apparatus according to either of the preceding claims, **characterized in that** the conveying device (5) is formed by scoops, which are preferably arranged on scoop carriers of the first heat-transfer device (4).

4. Apparatus according to one of the preceding claims, **characterized in that** the expansion vessel (9) is configured for expansion of the condensate formed from the heating steam and for subsequent separation of a residual condensate and an expansion steam that is formed.

5. Apparatus according to one of the preceding claims, **characterized in that** the evaporator device (12) is in designed as a falling-film evaporator (14).

6. Apparatus according to one of the preceding claims, **characterized in that** a second heat-transfer device (18), which is preferably designed as a tube bundle (19) with a multiplicity of tubes and in the manner of a heat exchanger, is arranged within the evaporator device (12).

## Revendications

1. Dispositif de séchage de produits humides à écoulement libre, ledit dispositif comprenant
- un récipient (1) qui est pourvu d'une ouverture d'entrée (2) destinée à fournir des produits humides à écoulement libre et d'une ouverture de sortie (3) destinée à retirer les produits séchés à écoulement libre,
- un premier module de transfert de chaleur (4) parcouru par de la vapeur de chauffage à l'intérieur du récipient (1),
- un module de transport (5) destiné à transporter des produits à écoulement libre de l'ouverture d'entrée (2) à l'ouverture de sortie (3),
- une conduite d'alimentation en vapeur de chauffage (6) et une conduite d'évacuation de vapeur de chauffage (7) destinées au premier module de transfert de chaleur (4)
- une conduite de vapeur d'échappement (8) destinée au récipient (1),
Le dispositif comportant un vase d'expansion (9) qui est relié à la conduite d'évacuation de vapeur de chauffage (7) et qui est relié d'une part à un premier module compresseur (10, 11) qui est relié à la conduite d'alimentation en vapeur de chauffage (6) et d'autre part à un dispositif évaporateur (12), le dispositif évaporateur (12) étant également relié au premier module compresseur (10, 11) et la conduite de vapeur d'échappement (8) du récipient (1) étant également reliée au module évaporateur (12) avec interposition d'un deuxième module compresseur (13), **caractérisé en ce qu'**un module de filtration (37) est disposé entre le récipient (1) et le deuxième module compresseur et le premier module de transfert de chaleur (4) est réalisé sous la forme d'un faisceau de tubes (14) comprenant un grand nombre de tubes parcourus par de la vapeur de chauffage, le premier module de transfert de chaleur (4) étant disposé dans le récipient (1) de préférence de manière à pouvoir tourner, et
le premier module compresseur (10, 11) comprenant au moins un compresseur radial (10) et de préférence un compresseur à piston (11) monté en aval du compresseur radial (10) et
le premier dispositif compresseur (10, 11) étant conçu pour comprimer la vapeur provenant du vase d'expansion (9) et la vapeur provenant du module évaporateur (12) et ainsi pour les chauffer de manière à ce que la vapeur résultante et la vapeur de chauffage générée de manière conventionnelle puissent être mélangés entre elles par le biais d'une vanne de régulation (36), la pression de vapeur de chauffage nécessaire au séchage étant réglable par le biais de la vanne de régulation (36).

2. Dispositif selon la revendication 1, **caractérisé en ce que** le deuxième module compresseur (13) est réalisé sous la forme d'un compresseur radial.

3. Dispositif selon l'une des revendications précédentes, **caractérisé en ce que** le module de transport (5) est formé par des aubes qui sont de préférence disposées sur des supports d'aubes du premier module de transfert de chaleur (4).

4. Dispositif selon l'une des revendications précédentes, **caractérisé en ce que** le vase d'expansion (9) est destiné à détendre le condensat produit à partir de la vapeur de chauffage et à séparer ultérieurement un condensat résiduel et une vapeur de détente résultante.

5. Dispositif selon l'une des revendications précédentes, **caractérisé en ce que** le module évaporateur (12) est réalisé sous la forme d'un évaporateur à film tombant (14).

6. Dispositif selon l'une des revendications précédentes, **caractérisé en ce qu'**un deuxième module de transfert de chaleur (18) est disposé à l'intérieur du module évaporateur (12) qui est de préférence conçu comme un faisceau de tubes (19) comprenant un grand nombre de tubes et à la manière d'un échangeur de chaleur.
